# EUROPEAN PATENT APPLICATION

(11) **EP 1 416 304 A2**
(43) Date of publication of application: **06.05.2004**
(21) Application number: 03023251.6
(22) Date of filing: 14.10.2003
(51) Int. Cl.: G02B 6/42

(54) **Optical fiber array collimator**

(30) Priority: 23.10.2002 US 278257
(71) Applicant: Northrop Grumman Corporation, Los Angeles, CA 90067-2199 (US)
(72) Inventor: Komine, Hiroshi, Torrance, CA 90505 (US); Brosnan, Stephen J., San Pedro, CA 90732 (US); Palese, Stephen P., Torrance, CA 90505 (US)
(74) Representative: Schmidt, Steffen J., Dipl.-Ing.

(57) **Abstract**

An optical collimator system for a high power fiber laser system that collimates the individual light beams amplified by a plurality of fibers in the laser system. The fibers are optically coupled to undoped fibers and the fibers are optically coupled to one surface of an optical substrate. A registration guide precisely aligns the fibers to the substrate. Lenses are optically coupled to an opposing surface of the substrate in precise alignment with the optical fibers. The light beam from each fiber propagates through the substrate and diverges, and the associated lens collimates the beam to have a desired beam width and direction. Each lens includes an anti-reflective coating so that the optical beam from the fiber is not significantly reflected back through the substrate.

## Description

### BACKGROUND OF THE INVENTION

### 1. Field of the Invention

This invention relates generally to a collimator for a fiber array laser and, more particularly, to a collimator for a fiber array laser that provides registered fiber positions, multiple collimated beams, mitigated optical back reflection and damage, and a rugged support structure.

### 2. Discussion of the Related Art

High power lasers are employed for many applications, such as military applications against a variety of airborne threats, including ballistic missiles, cruise missiles and tactical aircraft. Diode-pumped, solid-state lasers or amplifiers employing an array of fibers are one known high power laser used for these types of applications. U.S. Patent No. 6,229,939, titled High Power Fiber Ribbon Laser and Amplifier, assigned to the Assignee of this invention, and herein incorporated by reference, discloses such a high power fiber array laser.

A typical high power fiber array laser includes an array of spaced apart single-mode fibers each generating a separate laser beam that are combined into a single beam to provide the high power output. Fiber array lasers of this type may include a hundred or more single-mode fibers each generating upwards of a hundred watts of power. Each fiber in the array typically includes a round core having a diameter on the order of 5-20 µm to generate the laser beam. An inner cladding layer around the core traps the single-mode beam within the core. An outer cladding layer reflects pump light across the core to be absorbed therein and amplify the beam. A single-mode laser beam generates the most power per unit area when the beam is focused. As the number of transverse modes of the laser beam increases, the size of the beam spot that can be focused also increases as a result of a lack of spatial coherence among the modes. This reduces the beam power per unit area, which reduces its intensity.

The power output of a fiber laser can be increased by increasing the length of the core of the fibers and providing more optical pump light. However, the material of the core has power limits that if exceeded may damage the core material. Multiple single-mode fibers are thus required to generate the desired total beam output power. More optical power can also be provided by making the core diameter larger. However, as the core diameter increases, the generation of higher-order modes begin to develop, and it becomes increasingly more difficult to limit the beam to a single-mode. Further, as the size of the core and the power increases, the generation of heat in the core also increases. Cooling systems are employed to reduce the heat, but larger diameter cores make it more difficult to remove the heat from the center of the core. Therefore, a heat gradient may exist across the core, which causes a decrease in performance of the laser.

For certain applications, such as those mentioned above, the beam generated by the laser propagates through free space to a target area. Thus, it is necessary that the beam be collimated to minimize beam divergence and decrease beam spot size at the target area. Because of the orientation of the many fibers in the fiber array, a single lens is ineffective in collimating the beams from all of the fibers together. It is known in the optical fiber telecommunications industry to provide individual lenses for each fiber in a fiber array amplifier and a tapered section attached to each fiber to produce individually collimated beams. However, these known techniques are limited in their ability to provide the tolerances necessary for a precisely collimated beam for high power applications.

### SUMMARY OF THE INVENTION

In accordance with the teachings of the present invention, a collimator for a high power fiber laser system is disclosed that collimates the individual beams generated by the plurality of fibers in the fiber array of the laser system. The fibers in the fiber array are optically coupled to one surface of an optical substrate, where a registration guide is provided to precisely align the fibers to the substrate. An array of lenses are optically coupled to an opposing surface of the substrate in precise alignment with the optical fibers, where a separate lens is provided for each fiber. The optical beam from each fiber propagates through the substrate and diverges, and the associated lens collimates the diverging beam to have a desired beam width.

An outer surface of each lens is coated with an anti-reflective coating so that the optical beam from the fiber is not significantly reflected back through the substrate. The registration guide receives most of the light that is reflected from the lenses, and acts as a thermal management device for dissipating heat. By widening the beam to the desired beam width, the intensity per unit area of each beam is reduced below the intensity that would damage the anti-reflective coating. The fibers and the lenses are optically coupled to the substrate by a low-temperature bonding process to preserve the molecular integrity of the fiber, lenses and substrate and prevent damage to the anti-reflective coatings.

Additional objects, features and advantages of the present invention will become apparent from the following description and appended claims taken in conjunction with the accompanying drawings.

### BRIEF DESCRIPTION OF THE DRAWINGS

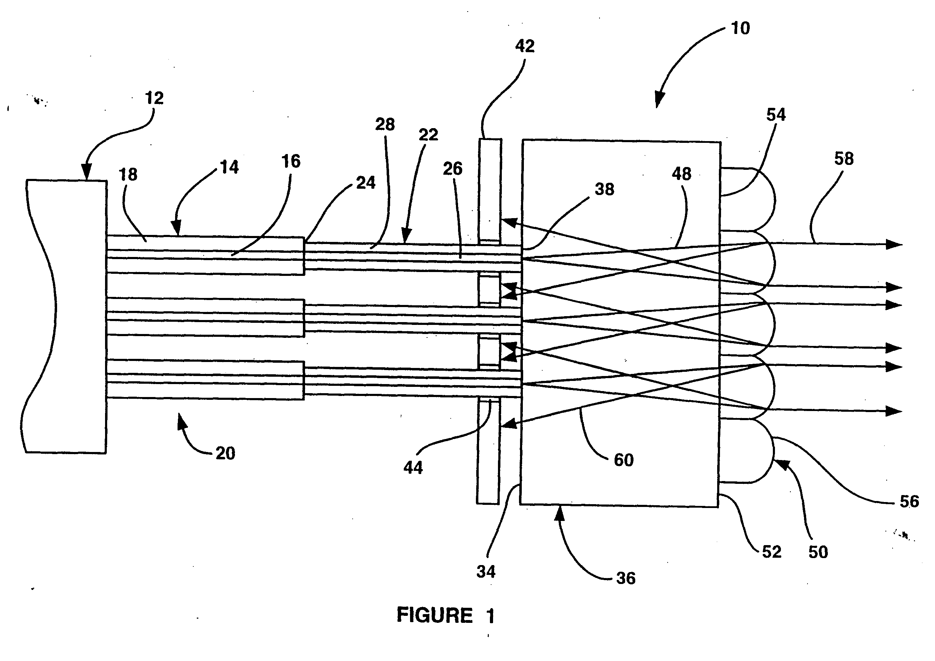

Figure 1 is a plan view of a collimator for an optical fiber array laser/amplifier, according to an embodiment of the present invention.

### DETAILED DESCRIPTION OF THE EMBODIMENTS

The following discussion of the embodiments of the invention directed to a collimator for an optical fiber array laser/amplifier is merely exemplary in nature, and is in no way intended to limit the invention or its applications or uses.

Figure 1 is a plan view of an optical collimator system 10, according to an embodiment of the present invention, that provides laser beam collimation necessary for many applications. The system 10 is optically coupled to a fiber array laser or amplifier 12 that generates a plurality of amplified single-mode laser beams propagating on a plurality of fibers 14 arranged in a fiber array 20 bundled in a desirable manner. The fiber laser 12 can be any suitable fiber laser that provides the desired output power, such as a diode-pumped, dual-clad ytterbium-doped glass fiber array laser. However, as will be appreciated by those skilled in the art, the fiber array laser 12 can be any fiber laser or amplifier suitable for the purposes described herein that provides a high power laser beam. Only three of the fibers 14 in the fiber array 20 are shown in this depiction, with the understanding that the array 20 may include several hundred fibers 14 optically packed together in a desirable manner, such as in a rectangle, hexagonal or circular configuration. The fibers 14 are spaced apart from each for proper heat dissipation and the like, as would also be well understood to those skilled in the art.

Each fiber 14 includes a single-mode fiber core 16 surrounded by outer cladding layers 18 each being made of a suitable fiber material, such as silica. Suitable optical doping is provided so that the index of refraction of the single-mode core 16 and the index of refraction of the inner most of the cladding layers 18 allows the laser light propagating down the core 16 at a predetermined angle of incidence to be contained within the core 16. Also, the diameter of the core 16 is limited (5-20 µm) so that only a single optical mode propagates therethrough. The fiber 14 would include other outer jacket layers not specifically shown in figure 1. The core 16 is doped with suitable lasing rare-earth ions, such as ytterbium and erbium, that would increase the power of the light propagated therethrough, as would be well understood to those skilled in the art. Pump light would be reflected back and forth across the core 16 to excite the rare-earth ions to provide the light amplification.

Each fiber 14 is fusion spliced to an undoped single-mode fiber 22 at an interface 24 so that the core 16 of the fiber 14 is optically coupled to a core 26 of the fiber 22. The fiber 22 also includes an outer cladding layer 28 having the appropriate index of refraction relative to the index refraction of the core 26 so that the laser light from the fiber 14 propagating through the interface 24 is contained within the core 26. In this discussion, the undoped fiber 22 refers to the rare-earth ions that provide light amplification, and not the doping that provides the index of refraction differences between the core 26 and the cladding layer 28. In this embodiment, the fiber 22 is shown having a narrower diameter than the fiber 14. However, this is merely to depict that the fibers 14 and 22 are different. In other embodiments, the diameter of the fiber 22 can be the same as the fiber 14 or greater than the diameter of the fiber 14.

An end of each fiber 22 opposite to the interface 24 is optically coupled to a surface 34 of an optical substrate 36. In one embodiment, the substrate 36 is a flat, solid transparent block of silica having the same index of refraction as the core 26 so that a high power output laser light beam 48 from the core 26 is not reflected at an interface 38 between the fiber 22 and the substrate 36.

In one embodiment, the fiber 22 is optically coupled to the surface 34 by a low-temperature optical coupling method, such as disclosed in U.S. Patent No. 6,284,085, herein incorporated by reference, to form the seamless optical interface 38 therebetween. The low-heat optical coupling method is performed at room temperature or a slightly elevated temperature so that there is no damage to the fiber core 26 and the substrate 36 at the molecular level. By using this bonding technique, optical adhesives and cements are not used to couple the fiber 22 to the substrate 36, which otherwise might be damaged by the high power light beam 48 emitted from the fiber core 26. Additionally, the low-temperature optical coupling technique will not damage other parts of the system 10, such as certain anti-reflective coatings discussed below. The low temperature optical coupling technique preserves the physical features of the fiber 22 and the substrate 36 to provide the seamless transition between the core 26 and the substrate 36.

A registration guide 42, including a plurality of openings 44 spaced a certain distance apart and having a certain diameter, is provided to accept the fibers 22, as shown. In one embodiment, the registration guide 42 is a silicon or glass. The fibers 22 are mounted to the registration guide 42 within the openings 44 prior to the fibers 22 being optically coupled to the substrate 36. In one embodiment, the openings 44 are formed in the registration guide 42 by a photolithography etching process employing masks and the like. The high precision photolithography process that generates the openings 44 provides high precision alignment of the fibers 22 relative to each other. In an alternate embodiment, capillary tubes can be provided at the openings 44 in which the fibers 22 are inserted. The registration guide 42 is oriented relative to the substrate 36 so that the fibers 22 are precisely aligned to the substrate 36 for reasons that will become apparent from the discussion below.

According to the invention, a plurality of convex lenses 50 are optically mounted to a surface 52 of the substrate 36 opposite to the surface 34. Each lens 50 is oriented relative to a specific fiber 22 to collimate the light beam 48 therefrom. The lenses 50 are made of the same material, such as silica, and have the same index of refraction as the fiber core 26 and the substrate 36. As above, a low temperature bonding technique is used to mount the lenses 50 to the substrate 36 to preserve their molecular integrity and provide a seamless interface 54 therebetween. Although there are five lenses 50 and three fibers 22 depicted in this example, it would be clear to those skilled in the art, that a separate lens 50 is provided for each of the many separate fiber 22. Further, the lenses 52 are shown here as being contiguous with each other. However, in other embodiments, the lenses 50 may be spaced apart from each other a certain distance.

The light beam 48 emitted from the core 26 in each fiber 22 diverges as it propagates through the substrate 36 towards the lens 50. The thickness of the substrate 36 and the diameter of the lens 50 are selected so that when the beam 48 reaches the lens 50 it has a certain beam width that provides a predetermined power per unit area. The lens 50 collimates the diverging beam 48 to provide a collimated output beam 58 that minimally diverges as it propagates towards the target area. The collimated output beams 58 from the several lenses 50 combine in parallel with each other to provide the total beam having a desired power and beam width.

Because the lenses 50 have the same index of refraction as the substrate 36 and are seamlessly coupled thereto by the low-temperature process, no Fresnel reflections are provided at the interface 54 between the substrate 36 and the lenses 50. However, because the lenses 50 and air have different indexes of refraction, Fresnel reflections occur at the transition therebetween and part of the beam 48 is reflected back into the substrate 36, as shown, as a reflected beam 60. Most of the reflected beams 60 impinge the registration guide 42 and are absorbed therein. Thus, the registration guide 42 also acts as a thermal management device for the system 10. The thermal management properties of the registration guide 42 require it be made of a highly thermally conductive material, such as silicon, and/or being cooled by a suitable cooling system (not shown).

According to the invention, each lens 50 is coated with an anti-reflective outer dielectric coating 56 of the type well known to those skilled in the art to minimize the Fresnel reflections. As is known in the art, these types of anti-reflective coatings minimize reflections by providing an interference cancellation of the reflected optical beam. Particularly, the reflections and transmissions that occur at the interface between the lens 50 and the outer coating 56 and the outer coating 56 and air generates an interference pattern within the coating 56 that cancels a significant portion of the reflections that otherwise would occur from the transition of the lens 50 and air. As discussed above, the width of the substrate 36 and the diameter of the lens 50 are selected so that the power per unit area of the beam 48 when it impinges the anti-reflective coating 56 is not high enough to cause damage thereto. Additionally, the low-temperature bonding process for bonding the fiber 22 to the substrate 36 and the lenses 50 to the substrate 36 is also at a low enough temperature so as to not cause damage to the anti-reflective coating 56.

Typical reflections of a Fresnel transition will be about 4% of the total beam power. The anti-reflective coating 56 will typically reduce that reflection to about 0.1% of the total beam power. Additionally, because the light beams 48 are allowed to significantly diverge before they are collimated, the size of the beam spot of the reflected beams 60 at the interface 38 between the fiber 22 and the surface 34 allows an insignificant portion of the light to be coupled back into the core 26 that may otherwise cause problems. Thus, it is not necessary to put an angle polish on the end of the fibers 22 at the transition 38 to prevent such back reflection coupling, as is common in the known systems. Thus, the combined effects of the propagation geometry and the anti-reflective coatings 56 mitigate both optical damage to the core 26 and back-reflection feedback without angles at the end of the fibers 22 that are commonly used in typical fibers without coatings. The anti-reflection coatings 56 on the lens 50 minimize the transmission losses and associated thermal load on adjacent system parts, and thereby enhance optical throughput efficiency in the alignment stability.

Various alignment techniques can be employed to align each lens 50 with the optical axis of the associated fiber 22. In one embodiment, it may be desirable to attach the fibers 22 to the surface 34 using the registration guide 42 and the optical coupling technique, and then independently align each separate lens 50 to the associated fiber 22. In an alternate embodiment, it may be desirable to first optically couple the lens 50 to the surface 52 of the substrate 36, and then use the registration guide 42 to specifically align the fibers 22 to its associated lens 50. In either process, alignment systems (not shown) may be required to detect each beam 58 independently of the other beams 58 to provide the desired alignment between the fibers 22 and the lenses 50.

The foregoing discussion discloses and describes merely exemplary embodiments of the present invention. One skilled in the art will readily recognize from such discussion and from the accompanying drawings and claims that various changes, modifications and variations can be made therein without departing from the spirit and scope of the invention as defined in the following claims.

## Claims

1. An optical system comprising:
an optical substrate including a first surface and a second surface opposing each other, said optical substrate having an optical substrate index of refraction;
a plurality of optical fibers arranged in a fiber array and optically coupled to the first surface of the optical substrate, said optical fibers each including a core having a core index of refraction, wherein the core index of refraction is about the same as the optical substrate index of refraction; and
a plurality of lenses optically coupled to the second surface of the substrate, each lens having a lens index of refraction that is about the same as the optical substrate index of refraction, wherein a separate lens is optically aligned with each of the optical fibers so that an optical beam emitted from each optical fiber diverges as it propagates through the optical substrate and is collimated by the associated lens to have a desired beam width and beam direction.

2. The system according to claim 1 wherein each lens includes an anti-reflective coating on a surface of the lens opposite to the substrate, said anti-reflective coating reducing Fresnel reflections of the collimated optical beam as it propagates out of the lens and into space.

3. The system according to claim 1 further comprising a registration guide including a plurality of openings, said optical fibers being positioned within the openings and said registration guide precisely positioning the plurality of optical fibers relative to the first surface of the substrate.

4. The system according to claim 1 wherein the optical fibers and the lenses are optically coupled to the substrate by a low-temperature bonding process that provides for bonding of two materials at or about room temperature to provide a seamless transition therebetween.

5. The system according to claim 4 wherein the low temperature bonding process is performed at a temperature that does not damage an anti-reflective coating on the lenses.

6. The system according to claim 1 wherein the optical substrate is a flat, solid transparent block of silica.

7. The system according to claim 1 wherein the core of the optical fibers are not doped with amplifying ions.

8. The system according to claim 7 wherein each optical fiber is coupled to an amplifying fiber associated with a fiber array laser, wherein the amplifying fibers include a core doped with amplifying ions.

9. The system according to claim 8 wherein the fiber array laser is a high power laser including many fibers each generating about 100 watts of power.
